# EUROPEAN PATENT SPECIFICATION

(11) **EP 4 207 997 B1**
(45) Date of publication and mention of the grant of the patent: **24.09.2025**
(21) Application number: 21863109.1
(22) Date of filing: 31.08.2021
(51) Int. Cl.: A01B 21/08, A01B 23/06, A01B 15/16, A01B 19/08

(54) **AGRICULTURAL GROUND ENGAGING CHAIN AND LINK SYSTEM**
LANDWIRTSCHAFTLICHES BODENEINGRIFFSKETTEN- UND -VERBINDUNGSSYSTEM
CHAÎNE AGRICOLE DE MISE EN PRISE AVEC LA TERRE ET SYSTÈME DE LIAISON

(30) Priority: 04.09.2020 AU 2020903179
(43) Date of publication of application: 12.07.2023
(73) Proprietor: Iron Grip Holdings Pty Limited, Eastern Creek, NSW 2766 (AU)
(72) Inventor: AINGE, Stephen Charles, Eastern Creek, New South Wales 2766 (AU)
(74) Representative: Zimmermann, Tankred Klaus
(86) International application number: PCT/AU2021/051010
(87) International publication number: WO 2022/047529

(56) References cited:
- WO-A1-2015/131246
- WO-A1-2015/131246
- WO-A1-2019/148240
- WO-A1-2019/148240
- AU-B2- 2007 216 912
- GB-A- 859 317
- US-A- 2 979 138
- US-A- 2 979 138
- US-A- 3 690 385
- US-A- 4 577 699

## Description

### Technical Field

The present disclosure relates to agricultural equipment, in particular a harrow for preparing soil for agriculture. The present disclosure has particular relevance to agricultural equipment of the type including a chain of linked harrow members.

### Background

Harrows have been used by farmers to assist in preparation of soil for farming. This can include breaking up the soil, furrowing it, and depositing the broken up material into the ground. It may also include uprooting and breaking stubble from the previous harvest or other plant material, such as weeds.

It is known to provide harrows that include a plurality of discs (harrow members) linked together to form a chain. The chain is pulled along the ground surface whereby the discs roll and engage the ground to break the soil and other material therein. Typically, the surfaces of the discs are at an angle to the direction of travel to provide an angle of attack between the discs and the soil.

Such harrows can be mechanised, with the chain of discs extending between two sides of a frame, with the frame towed by a tractor or other farm equipment. Such a known type of harrow is described in Australian patent no. 2007216912. In this prior art, each link in the chain includes a harrow disc, and a pair of link portions, such as a hook portion and a loop portion, disposed on either side of the harrow disc. To form the chain, the hook is hooked into the loop of an adjacent link, and the chain is tensioned to prevent the links from unhooking and separating. To separate the links, tension is relaxed so the links can be unhooked.

Known systems, such as that described in AU 2007216912 have a chain formed of links where the hook, loop and disc are all integrally formed. For example having the disc, hook portions, and loop portions welded together. In another form, the hook, loop, and disc of a link may be formed by a single casting, forging or other integrally forming technique. This is provided to assist assembly and disassembly for the user, as one needs only to hook and unhook the links.

However where the links are integral, it may be impractical to maintain or repair individual links that are worn or damaged. For example, if a hook portion is broken or damaged, the whole link may need to be discarded even if the loop portion and the harrow disc are still serviceable. Similarly, if the harrow disc is worn or damaged during use, the link may need to be discarded even if the loop portion and hook portion are serviceable.

Furthermore, integral links may result in limitations on methods of manufacture and material properties of the link. It may also lead to a compromise of the required properties of the disc and the materials. For example, the loop and hook portion has a primary function of joining the link together, whereas the harrow disc has the function of impacting with and engaging earth. Thus the harrow disc may wear at a rate much higher than the hook loop and require higher wear resistance and toughness/hardness than the other portions. Thus an integral link or integrally formed link may include a compromise in material properties. There may also be financial costs, as portions of the link may consequently be made of materials or formed by a process that is beyond the practical requirements.

As an example, it is known to manufacture a link with the harrow disc, loop portion, and hook portion in a single casting. Casting a component can produce a weaker component compared to other (and usually more expensive) techniques. As a result, to obtain an acceptable strength for the harrow disc, an integrally formed link made from casting may require the harrow disc to be thicker and heavier compared to, for example only, a forged harrow disc. However, for technical and financial reasons, it may be acceptable for the loop and hook portions to be formed of casting.

Any discussion of documents, acts, materials, devices, articles or the like which has been included in the present specification is not to be taken as an admission that any or all of these matters form part of the prior art base or were common general knowledge in the field relevant to the present disclosure as it existed before the priority date of each claim of this application.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

### Summary

A link assembly for an agricultural ground engaging chain including a plurality of link assemblies, the link assembly including: a first component having a first clamping portion and a first link portion for linking with a link portion of an adjacent link assembly; a second component having a second clamping portion and a second link portion for linking with a link portion of an adjacent link assembly; a harrow member has a first side and an opposite second side; at least one resilient spring plate, wherein the resilient spring plate is elastically deformable, and at least one fastening element; wherein, when the link is assembled, the harrow member and the resilient spring plate are clamped between the first clamping portion and the second clamping portion, and wherein under an applied pressure to elastically deform the resilient spring plate to enable engagement of the at least one fastening element, whereby upon release of the applied pressure, the resultant elastic stress in the resilient spring plate urges the first and second components to bear against the fastening element to retain the components of the link assembly together.

A link assembly for an agricultural ground engaging chain including a plurality of said link assemblies, the link assembly including: a first component having at least one first fastener receiving passage, a first clamping portion, and a first link portion for linking with a link portion of an adjacent assembly; a second component having at least one second fastener receiving passage, a second clamping portion, and a second link portion for linking with a link portion of another adjacent link assembly; a harrow member has a first side and an opposite second side; a resilient spring plate, wherein the resilient spring plate is elastically deformable; and at least one fastener having a shaft extending along a central shaft axis; wherein when the link assembly is assembled; the shaft is located, at least in part, through the first and second fastener receiving passages; the harrow member and the resilient spring plate are located between the clamping portions of the first and second components; and the resilient spring plate is elastically deformed such that the resultant stress in the resilient spring plate causes wall portions of each of the first and second fastener receiving passages to urge against the shaft towards the shaft axis to increase the maximum static frictional force between the wall portions of the first and second fastener receiving passages and the shaft.

In one example of the link assembly; the first component includes a projecting portion opposite the first link portion, wherein the first fastener receiving passage is disposed in the projecting portion, the second component includes a socket opposite the second link portion, wherein the socket is adapted to receive at least part of the projecting portion, the harrow member includes a harrow aperture, the resilient spring plate includes a plate aperture wherein when the link assembly is assembled, the first component passes through the harrow aperture and the plate aperture, and the projecting portion and the first fastener receiving passage is located adjacent the second side of the harrow member, and wherein when the link assembly is assembled, at least part of the projecting portion is located in the socket with the first and second fastener receiving passages aligned for locating the shaft.

In some examples of the link assembly, the harrow member has a first side and an opposite second side wherein when the link assembly is assembled, the first side faces the clamping portion of the first component and second side faces the clamping portion of the second component, wherein the resilient spring plate is located: between the first side and the clamping portion of the first component, or between the second side and the clamping portion of the second component.

In some examples of the link assembly, the harrow member is substantially disc-shaped or dish-shaped with the first side having a concave surface, and wherein the resilient spring plate is located adjacent to the first side.

In some examples of the link assembly, the resilient spring plate is a circular plate.

In some examples of the link assembly, the first and second link portions are formed of a hook portion or a loop portion.

In some examples of the link assembly, the first link portion, at the first side of the harrow member, includes a bulbous end. The second link portion, at the second side of the harrow member, includes a socket. To link with adjacent link assemblies, the bulbous end is received in a respective socket of an adjacent link assembly and the socket receives a respective bulbous end of another adjacent link assembly.

In further examples of the link assembly, the second link portion includes at a first bearing surface to define, at least in part, the socket and wherein at least a portion of the first bearing surface faces towards the second side of the harrow member, wherein when the respective bulbous end is received in the socket, the first bearing surface engages the respective bulbous end to resist movement of the respective bulbous end in a direction away from the second side.

In further examples of the link assembly, the first bearing surface is formed from an inwardly extending flange around a socket aperture of the socket, and the second link portion further comprises a track to allow insertion of the respective bulbous end into the socket.

In some examples the resilient spring plate comprises a spring steel.

In some examples the harrow member is substantially rigid.

In further examples of the link assembly the at least one resilient spring plate comprises a plurality of resilient spring plates, wherein the combination of the plurality of resilient spring plates and the harrow member are clamped between the first clamping portion and the second clamping portion.

In some examples, the plurality of resilient spring plates comprises: a first spring plate; and at least a second spring plate.

In some examples, the first spring plate and the second spring plate are configured with different respective spring constants.

In some examples of the link assembly, the first spring plate and second spring plate are circular plates configured with different respective diameters.

In some examples of the link assembly, the first spring plate and second spring plate are configured with different respective thicknesses.

In some examples of the link assembly, the plurality of resilient spring plates comprise at least two substantially identical spring plates.

In some examples of the link assembly, the plurality of resilient spring plates further comprise one or more subsequent spring plates.

There is also disclosed an agricultural ground engaging chain including a plurality of link assemblies described herein.

### Brief Description of Drawings

Fig. 1 illustrates a perspective view of an agricultural ground engaging chain in accordance with a first example;
Fig. 2 illustrates a top perspective view of a link assembly for the agricultural ground engaging chain in Fig. 1;
Fig. 3 is a side view of the link assembly of Fig. 2;
Fig. 4 is a cross section side view of the link assembly of Fig. 2 without a fastener and with the resilient spring plate in a relaxed state;
Fig. 5 is a perspective view of a resilient spring plate for the link assembly of Fig. 2;
Fig. 6 is a front view of the resilient spring plate of Fig. 5;
Fig. 7 is a cross section side view of the resilient spring plate of Fig. 5;
Fig. 8 is a detailed view of a portion of the resilient spring plate of Fig. 7;
Fig. 9 is a front view of a harrow member for the link assembly of Fig. 2;
Fig. 10 is a side view of the harrow member of Fig. 9;
Fig. 11 is a rear view of the harrow member of Fig. 9;
Fig. 12 is a cross section side view of the harrow member of Fig. 11;
Fig. 13 is a cross section side view of a first component, including a hook portion, for the link assembly of Fig. 2;
Fig. 14 is a top perspective view of the first component of Fig. 13;
Fig. 15 is a bottom perspective view of the first component of Fig. 13;
Fig. 16 is a cross section side view of a second component, including a loop portion, for the link assembly of Fig. 2;
Fig. 17 is a rear perspective view of the second component of Fig. 16;
Fig. 18 is a front perspective view of the second component of Fig. 16;
Fig. 19 is a perspective view of a fastener for the link assembly of Fig. 2;
Fig. 20 illustrates a top view of an agricultural ground engaging chain in accordance with a second example;
Fig. 21 illustrates a side view of the agricultural ground engaging chain of Fig. 20;
Fig. 22 illustrates a top view of a link assembly for the agricultural ground engaging chain of Fig. 21;
Fig. 23 illustrates a cross section side view of the link assembly of Fig. 22 without the fasteners and with the resilient spring plate in a relaxed state;
Fig. 24 illustrates a perspective view of a first component for the link assembly of Fig. 22;
Fig. 25 illustrates a top view of the first component of Fig. 24;
Fig. 26 illustrates a cross section side view of the first component of Fig. 25.
Fig. 27 illustrates an exploded view of a link assembly for an agricultural ground engaging chain in accordance with a third example with a plurality of resilient spring plates;
Fig. 28 illustrates a top perspective view of a link assembly in Fig. 27;
Fig. 29 is a side view of the link assembly of Fig. 27; and
Fig. 30 is a cross section side view of the link assembly of Figs. 27 and 29 without a fastener and with the plurality of resilient spring plates in a relaxed state.

### Description of Embodiments

The concepts of the present disclosure can be adapted to be used with one or more of the agricultural ground engaging chain and link systems disclosed in WO 2015/131246 (International application no. PCT/AU2015/050086 filed 3 March 2015) and WO 2019/148240 (International application no. PCT/AU2019/050068 filed 31 January 2019). The inventions disclosed in these publications share common inventor(s) to the present disclosure.

In particular the resilient harrow member (and, if provided, clamping sub component) disclosed in these earlier publications can be modified, or otherwise adapted, to use the harrow member 5 and resilient spring plate 22 disclosed herein. Thus instead of relying primarily on the resilient properties of the harrow member (as provided in examples of these prior publications), such modified systems will use the resilient properties of the resilient spring plate 22 to apply the force(s) to retain the components of the link assembly together.

### Overview of a first example

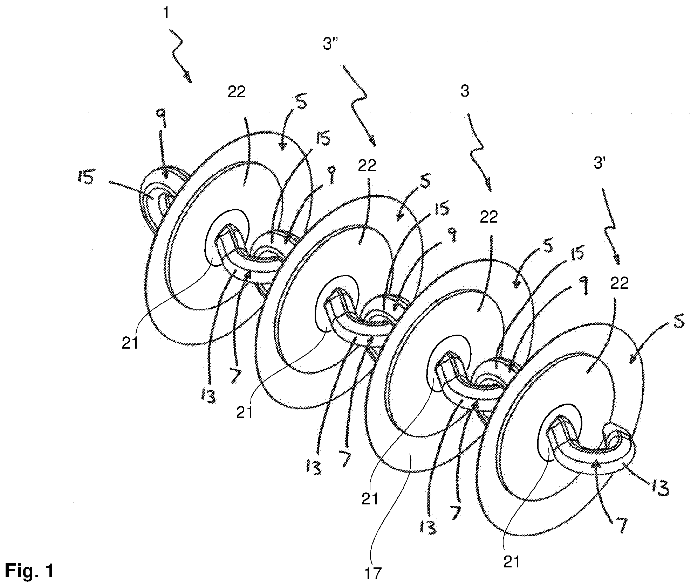

Fig. 1 illustrates an agricultural ground engaging chain 1 according to an embodiment of the present disclosure. The chain 1 is formed by linking a plurality of link assemblies 3, 3', 3"'. Each link assembly has a harrow member 5, at least one resilient spring plate 22, a first component 7, a second component 9, and a fastening element (such as a fastener 11) for assisting in holding or retaining the other components of the link assembly 3 together.

The agricultural ground engaging chain 1 is typically attached to a frame (not shown) which in turn is pulled by a tractor. The ends of the ground engaging chain are attached to free spinning spindles, thereby allowing the chain 1 to freely rotate as the harrow members 5 move across the ground.

The first component 7 has a first link portion 13, which in this embodiment is in the form of a hook 13. The second component 9 has a second link portion 15, embodied as a loop 15. The hook 13 and loop 15 of each link assembly 3 allows releasable linking to respective hooks 13 and loops 15 of adjacent link assemblies 3', 3" to form the chain 1. The length of the chain 1 can be adjusted by hooking or unhooking link assemblies 3 to achieve the desired length. Other variations of link portions can also be used and will be discussed in other examples below.

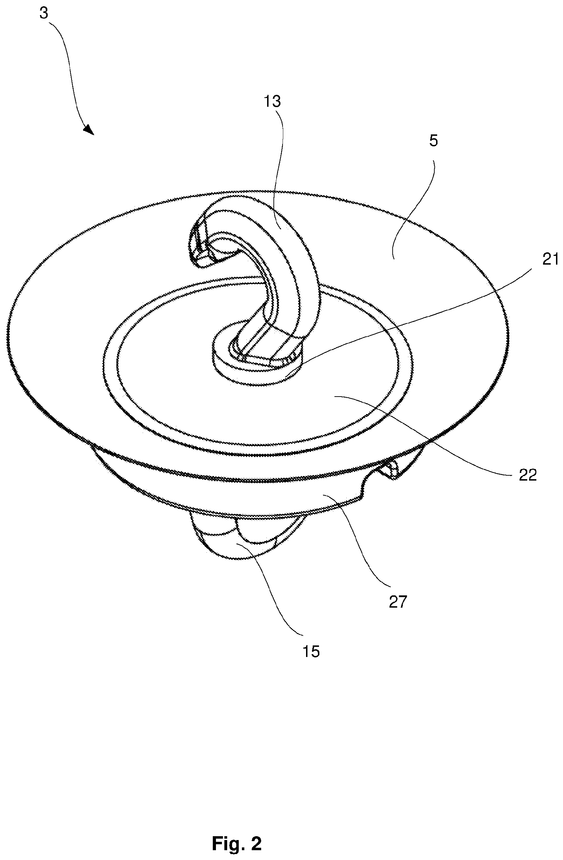

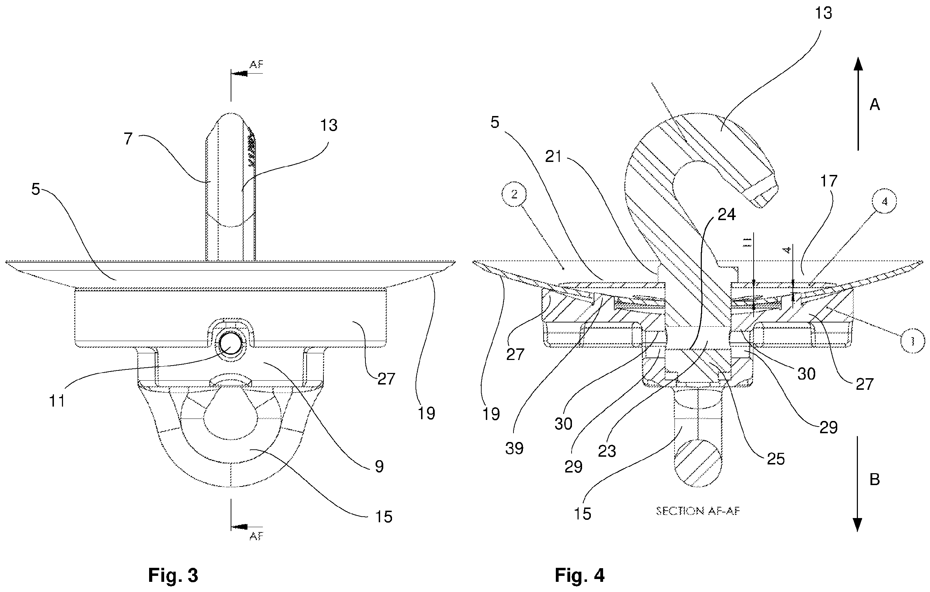

Figs. 2 to 4 illustrate an assembled link assembly 3 in accordance with the first example. The first component 7, in addition to the first link portion 13, includes a first clamping portion 21 (as an annular collar), and a first fastener receiving passage 23 located in projecting portion 25. The second component 9, in addition to the second link portion 15, includes a second clamping portion 27, and a second fastener receiving passage 29. The harrow member 5 includes a first side 17, and an opposite second side 19. The resilient spring plate 22 is a substantially flat disc with a plate aperture 42. As best illustrated in Fig. 4, the harrow member 5 and resilient spring plate 22 are clamped between respective first and second clamping portions 21, 27. The fastener 11, having a shaft portion 12 with a central shaft axis is located through the first and second fastener receiving passages 23, 29 to assist in keeping the components of the link assembly 3 together.

When the link assembly 3 is assembled, the resilient spring plate 22 is elastically deformed under applied pressure between the first and second clamping portions 21, 27. As a result the elastic resilient spring plate 22 urges against the first clamping portion 21 in direction A. The resilient spring plate 22 also urges, in the opposite direction B against the first side 17 of the harrow member 5. In turn, the second side 19 of the harrow member 5 urges against the second clamping portion 27 in direction B. Upon release of the pressure, this resultant elastic stress urges the first component 7 and second component 9 in opposite directions (A, B) away from each other, bearing against the fastener 11 to retain the components of the link assembly 3 together. The forcing apart of the first and second components (7, 9) in turn causes a wall portion 24 of the first fastener receiving passage 23 to urge against the shaft portion 12 towards the shaft axis, and a wall portion 30 of the second fastener receiving passage 29 to also urge against the shaft portion 12 towards the shaft axis (which in this embodiment is perpendicular to direction A and B). That is, this arrangement provides at least a component of normal force between the surface of the shaft portion 12 and respective wall portions of the first and second fastener receiving passages 23, 25. The effect is to increase the maximum static friction force between wall portions of the first and second fastener receiving passages 23, 25 and the shaft portion 12, thereby assisting in retaining the fastener 11 in the fastener receiving passages 23, 25 and maintaining the other components of the link assembly 3 together.

An advantage of the resilient spring plate 22, that is separate to the harrow member 5, is that the resilient spring plate 22 can be manufactured with properties suitable for resilience. For example, the spring plate 22 is designed primarily to have elastic properties. This can allow the harrow member 5 to be manufactured with properties suitable for the primary function as a harrow member 5 that may include durability, toughness and resistance to impact with earth, roots and rocks. This may also include having more rigidity than the spring plate 22.

Components of the first example will now be described in detail.

The resilient spring plate 22

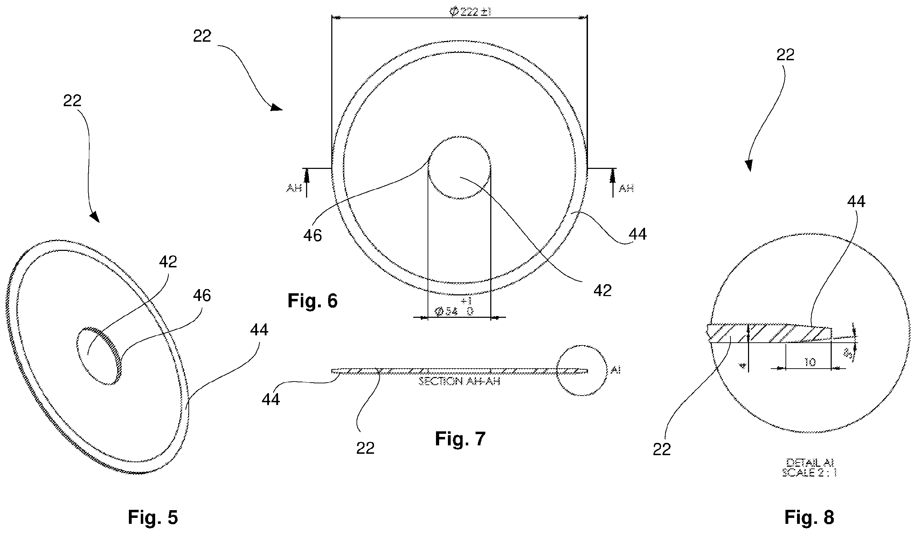

Figs. 5 to 8 illustrate views of the resilient spring plate 22. This example of the spring plate 22 is substantially circular plate with a central plate aperture 42. This includes an outer edge 44 around the circumference and an inner edge 46 around the perimeter of the central plate aperture 42. Referring to Fig. 8, which illustrates a detailed portion of the outer edge 44, the outer edge may include a bevel to contact the first side 17 of the harrow member 5. In this example, the bevel is approximately 5 degrees from the flat surface of the planar spring plate 22 (when in a relaxed state). The bevel increases the contact surface between the resilient spring plate 22 and the harrow member 5.

When installed in the link assembly 3 as shown in Fig. 4, the circular outer edge 44 is biased against the first side 17 (to cause the outer edge 44 to deflect in direction A). The inner edge 46, biased by the first clamping portion 21 is deflected in direction B. As the first component 7 and second component 9 are drawn towards each other the resilient spring plate 22 is deflected to a dish-shape. The resultant elastic stress, provide a restoring force/pressure against the clamping portions 21, 27. That is, the spring plate 22 acts like a spring against the clamping portions 21, 27.

It is to be appreciated that in other examples, the resilient spring plate 22 can include a circular dish-shaped form.

The resilient spring plate 22 may be constructed of elastic metal or metal alloys. In one example, this can include a spring steel. In some examples, this can include 65Mn spring steel.

### The harrow member 5

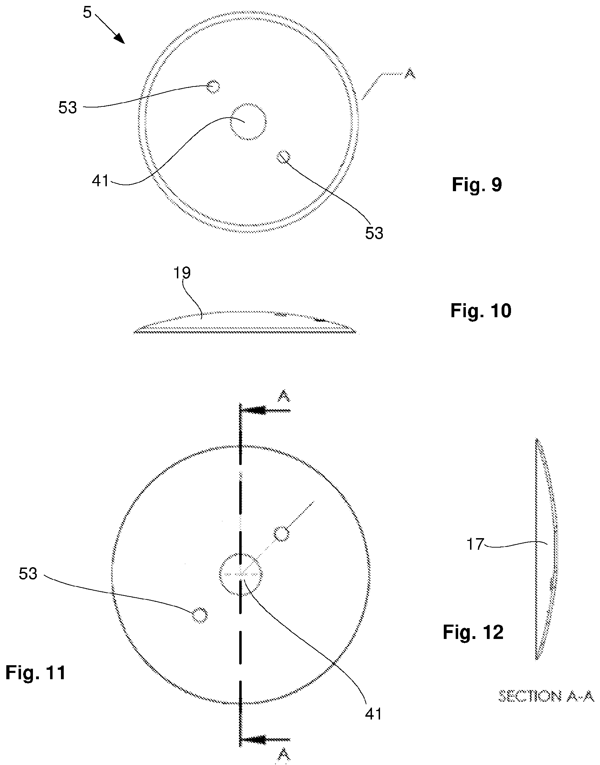

Referring to Figs. 9 to 12, the harrow member 5 is substantially disc-shaped, with a circular edge around the perimeter. This shape allows the harrow member 5 to rotate (i.e. roll) as the chain 1 is pulled across the surface of the soil.

The harrow member 5 has a central aperture 41 extending between the first side 17 and the second side 19. The harrow member 5 in this embodiment is dish-shaped, with the first side 17 having a concave surface and the second side 19 having a convex surface. This general shape may assist in engagement and manipulation of the soil. The shape may also assist in clamping of the components of the link assembly 3 together.

The resilient harrow member 5 may be heat treated, including case hardening to increase durability. Since the primary resilient mechanism is provided by the resilient spring plate 22, the entire surface of the harrow member 5 may be heat treated. This includes the circular permitter of the harrow member that is likely to impact soil, rocks, roots, etc. during use. Furthermore, the centre region of the harrow member 5 may also be heat treated as this region, in this example, does not need to retain resilience and elasticity. This latter point is in contrast with examples of the harrow member described in PCT/AU2015/050086 and PCT/AU2019/050068.

The harrow member portion 5 may also include anti-rotation apertures 53 that engage with other components of the link assembly 3. In one example, this includes engaging with the protrusions 39 of the second link portion 9. This prevents relative rotation of the harrow member portion 5 and other components of that same link assembly 3. This may reduce wear and fatigue on the components. It is to be appreciated that in examples, the first component 6 could be provided with protrusions to engage with the harrow member portion 5. In alternative examples, slots, grooves, or other structural features can be used to engage with the components of the link assembly to prevent relative rotation.

### The first component 7

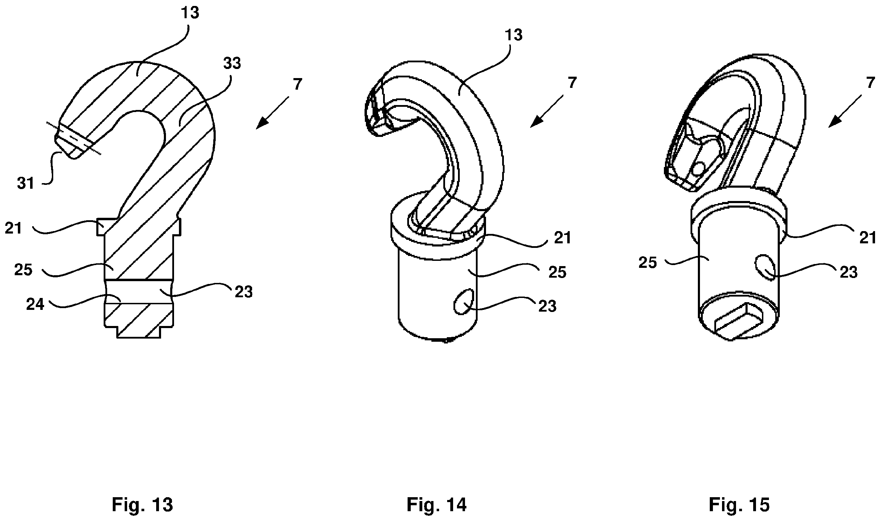

Referring to Figs. 13 to 15, the first component 7 includes a hook 13 for joining with a loop 15 of another link assembly 3. The open hook 13 starts with a narrow point 31 that widens to an arcuate bend 33 that extends towards the first clamping portion 21. The first clamping portion 21 is in the form of an annular collar.

The first clamping portion 21 is located in a central region of the first component 7, with a projecting portion 25 extending from the clamping portion 21 on the opposite side from the hook 13. The first clamping portion 21, in the present embodiment, has a flat annular surface to abut with the surface of the resilient spring plate 22 near the inner edge 46.

In the illustrated embodiment, the projecting portion 25 is adapted to pass through the central aperture 41 of the harrow member 5 and the central plate aperture 42 of the resilient spring plate 22, and to be received in the second component 9. The first fastener receiving passage 23 extends through the projecting portion 25. In this embodiment, the first fastener receiving passage 23 extends in a direction substantially perpendicular to the direction that the projecting portion 25 extends.

### The second component 9

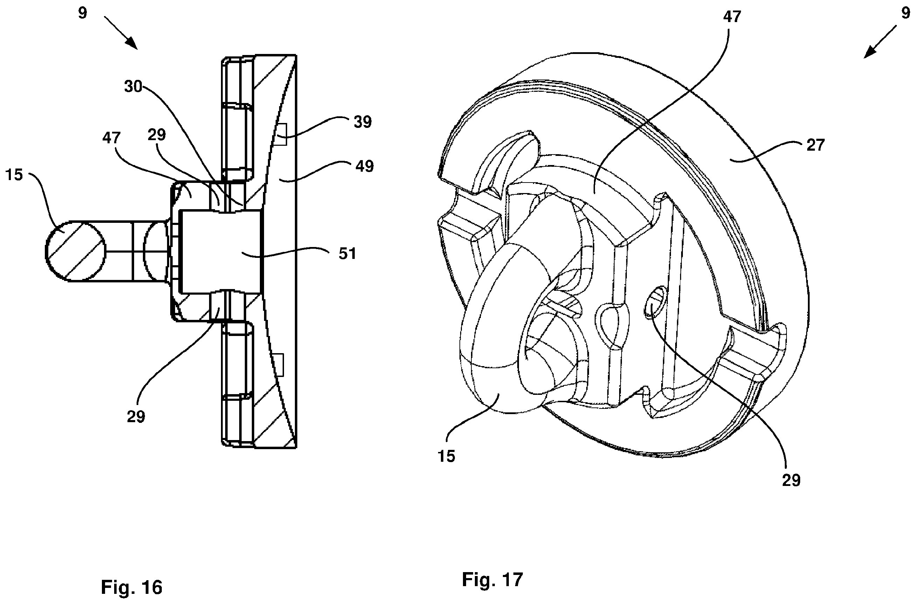

Referring to Figs. 16 to 18, the second component 9 includes a loop 15 for joining with a hook 13 of another link assembly 3. The loop 15 is a substantially circular closed ring sized to receive the hook 13.

At a central region of the second component 9 is a body portion 47. The second clamping portion 27, is located adjacent the central body portion 47 opposite to the loop 15. The second clamping portion 27, in the present embodiment, has a concave surface 49. The concave surface 49 of the second clamping portion 27 when assembled faces towards and, at least in part, abuts the corresponding convex surface of the second side 19 of the harrow member 5. In this example, the concave surface 49 has protrusions 39 to engage with corresponding anti-rotation apertures 53 in the harrow member 5 to prevent relative rotation.

Extending into the second component 9 from the concave surface 49 is a channel or socket 51. The socket 51 is adapted to receive the projecting portion 25 of the first component 7. The socket extends from the concave surface 49 and into the central body portion 47, as shown in Fig. 16. Thus the second fastener receiving passage 29 passes from at least one side of the body portion 47 through to the socket 51. The second fastener receiving passage 29 extends through the central body portion 47 in a direction perpendicular to direction A and B (as referenced when the link assembly is assembled as shown in Fig. 4). Importantly this allows, when assembled, the first fastener receiving passage 23 of the projecting portion 25 to be aligned with the second fastener receiving passage 29 of the central body portion 47, so that the shaft 12 of the fastener 11 may extend through both the passages 23, 29.

The socket 51 has a profile to complement the shape of the projecting portion 25. For example, it may have a cylindrical profile to match a similarly shaped projecting portion 25. In another embodiment, the projecting portion 25 and socket 51 may have a rectangular or square cross-section shape so that the projecting portion 25 can only be inserted into the socket 51 in the correct orientation. It is to be appreciated other shapes and forms may also be used, such as a round cross-section, an elliptical cross-section, a keyed cross-section, a circular cross-section with a segment removed, etc.

### Fastener 11

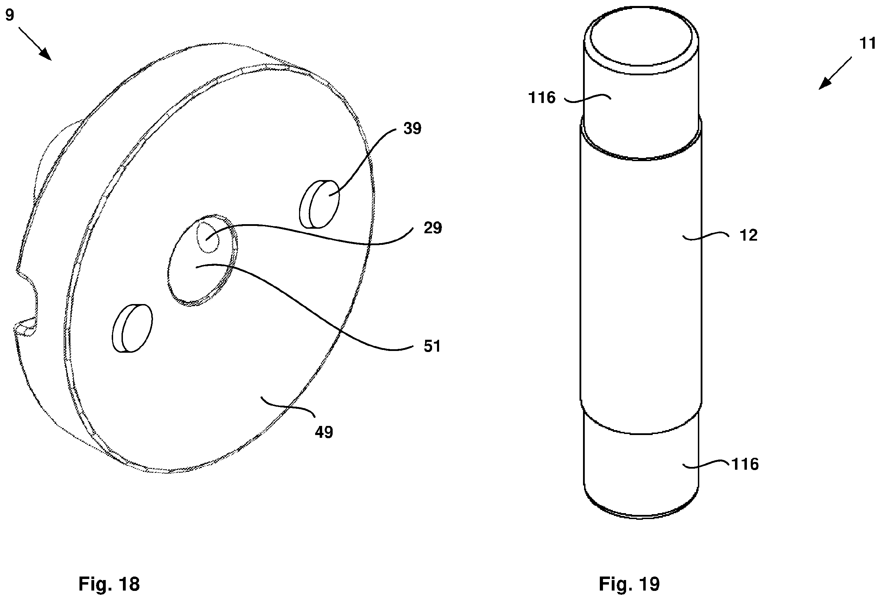

Referring to Fig. 19, the fastener 11 can include a pin with a substantially circular cross-section. The fastener 11 has a central shaft portion 112 with a relatively larger diameter than opposite shaft end portions 116 that have a smaller diameter. When assembled, the central shaft portion 112 is substantially located in the first fastener receiving passage 23 and the opposite end portions 116 are substantially located in the second fastener receiving passages 29.

### Overview of a second example

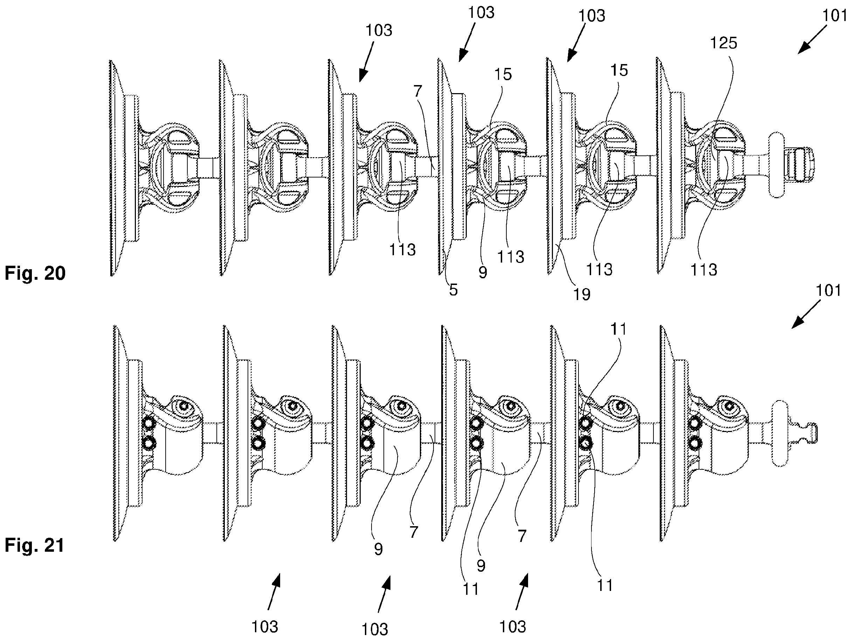

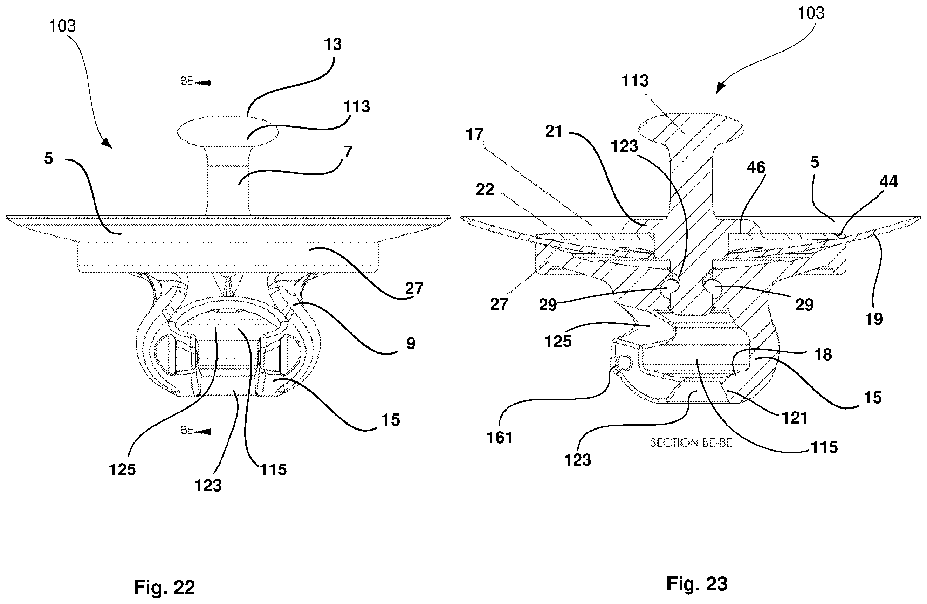

Figs. 20 and 21 illustrate another example of an agricultural ground engaging chain 101. Figs. 22 and 23 illustrate a link assembly 103 of the agricultural ground engaging chain 101. Like the earlier examples, the link assembly includes, a first component 7, a second component 9, a harrow member 5, resilient spring plate 22, and at least one fastening element 11 (in this case two pins). The function of the resilient spring plate 22 to urge the components to bear against the fastening element 11, and thus retain the components of the link assembly together, is similar to the earlier examples.

The main differences are those of the first component 7 and second component 9, which include some of the features described in PCT/AU2019/050068. The first component 7 includes a first clamping portion 21 and a first link portion 113. The first link portion 113 is provided at the first side of the harrow member 5, wherein the first link portion 13 includes a bulbous end 113. The second component 9 includes a second link portion 15 provided at the second side 19 of the harrow member 5 and includes a socket 115. To form a chain 1, the bulbous end 113 of a link assembly 103, is received in a respective socket 115 of an adjacent link assembly.

Referring to Fig. 23, the second link portion 15 includes a first bearing surface 18 to define, at least in part, the socket 115. At least a portion of the first bearing surface 18 faces towards the second side 19 of the harrow member 5. When a respective bulbous end 113 (of an adjacent link) is received in the socket 115, the first bearing surface 18 engages the respective bulbous end 115 to resist movement of the respective bulbous end in a direction away from the second side 19. This resistance assists the chain 1, comprised of the multiple link assemblies, to be tensioned.

The first bearing surface 18 is formed from an inwardly extending flange 121 that is around a socket aperture 121 of the socket 115. The second link portion 9 further includes a track 125 to allow insertion of the respective bulbous end 113 into the socket 115. Once the bulbous end 113 is inserted into the socket 115, the track 125, or at least part of the track, can be closed off by inserting a pin through aperture 161 to prevent the link assemblies from disconnecting with each other..

In some examples, the bulbous end 113 may rotate freely in the socket 115, such that adjacent link assemblies 103 can rotate freely relative to each other around the main axis 29. This is in contrast to hook and loop systems where a hook has restricted degree of rotation between the hook and the loop. This may reduce torsional forces and stress on components of the chain 1 and link system 203.

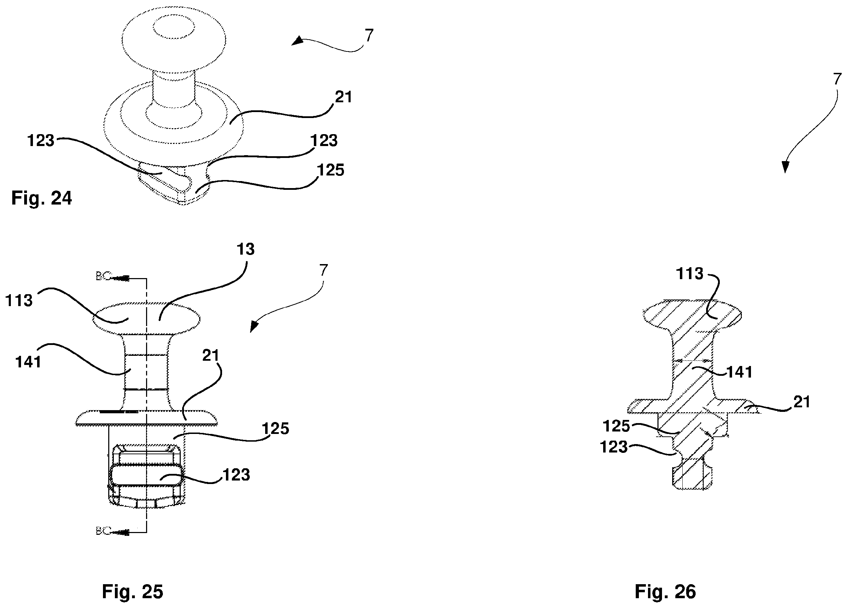

Figs. 24 to 26 illustrate the first component 7 of the second example. The bulbous end 113 may have a curved T-shape or mushroom shape. In some examples, the shape is symmetrical and rounded so that the bulbous end 113 may rotate inside the socket 115. Having a rounded shape may prevent particular points of high forces and/or stress.

A first clamping portion 21 in the form of an annular collar is provided along a shank portion 141 to bear against the resilient spring plate 22. At the opposite end to the bulbous end and shank portion 141 is a projecting portion 51. When assembled, the projecting portion 125 is inserted through the harrow member portion 5 and the resilient spring plate 22, and into the second component 9. A plurality of first fastener receiving passages 125 (in the form of grooves that extend perpendicular to the shank portion 141) are provided on the projecting portion 125 so that a fastener 11 can pass through the first fastener receiving passage 123 (and through the second fastener receiving passages 29) to fasten the first component 7 to the second component 9.

### Overview of a third example

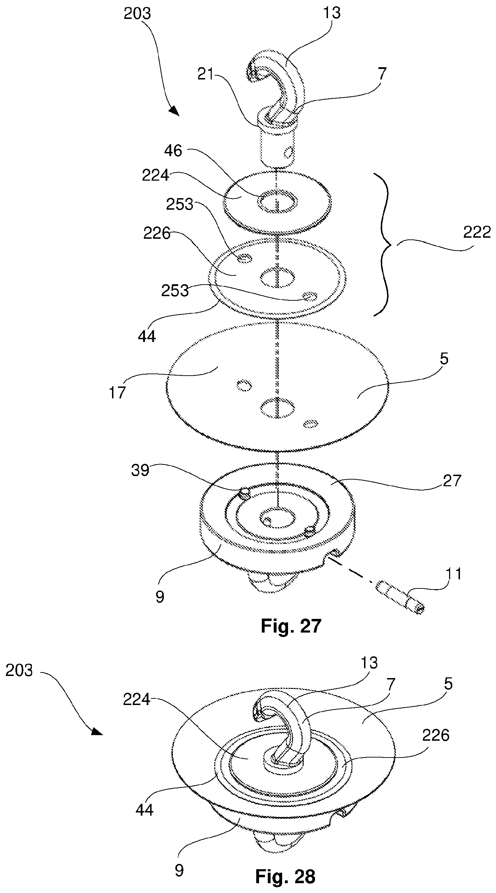

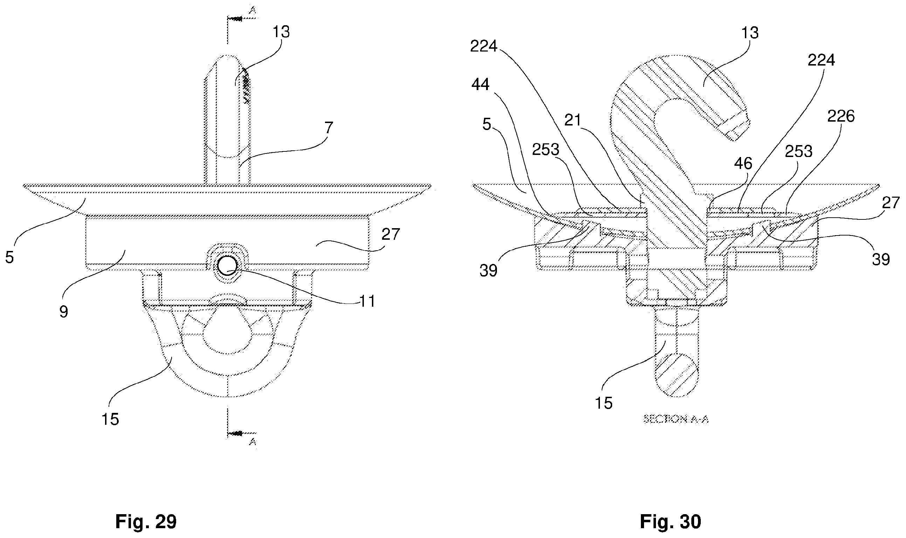

Fig, 27 illustrates an exploded view of another example of a link assembly 203 for use in an agricultural ground engaging chain. Like earlier examples, the link assembly 203 includes, a first component 7, a second component 9, a harrow member 5, and at least one fastening element 11 (not shown). The main difference is that instead of a single resilient spring plate 22, the link assembly 203 includes a plurality of resilient spring plates 222 and the harrow member 5 that are clamped between the first clamping portion 21 and the second clamping portion 27. The function of the combination of multiple resilient spring plates 222 is to urge the components to bear against the fastening element 11 and thus retain the components of the link assembly 203 together as best illustrated in Figs. 28 and 29.

The plurality of resilient spring plates 222 may be selected to provide, in combination, desired spring qualities, or size. This can include selecting different types of resilient spring plates 222 as well as the number of resilient spring plates. This allows tuning so that an appropriate force, or range of force, is applied to retain the components of the link assembly. Tuning may be advantageous, for example, when the type and/or size of harrow member 5 is changed or to compensate for wear or age of components in the link assembly.

In the example illustrated in Fig. 27, the multiple spring plates 222 includes a first spring plate 224 and a second spring plate 226. The first spring plate 224 is a substantially flat circular plate with an inner edge 46, at the central aperture, to abut with the first clamping portion 21. The second spring plate 226 is a substantially flat circular plate with an outer edge 44 to contact the first side 17 of the harrow member 5.

In some examples, the second spring plate 226 also includes a pair of anti-rotation apertures 253 to enable the protrusions 39 of the second link portion 9 to pass through without interfering the deflection of the second spring plate 226. In some examples the protrusion 39 engage with the anti-rotation apertures 253 thereby reducing any relative rotation or movement between the second spring plate 226 and the harrow member 5 during use.

The first spring plate 224, in this example, does not have anti-rotation apertures. When the link assembly is assembled the first spring plate 224 covers over the anti-rotation apertures 253. This can be advantageous in preventing ingress of dirt or other foreign objects into the anti-rotation apertures 253, 53 and the protrusions 39. This is best illustrated in Figs. 28 and 30.

In some examples, the first spring plate 224 and second spring plate 226 are constructed with different properties. This can include having different respective spring constants. This can also include different thicknesses, different diameters, and/or different materials. Such a composite construction can take advantage of different material and physical properties. For example, the first spring plate 224 may be made of high impact steel as this plate is more likely receive impact and wear. The second spring plate 226, shielded by the first spring plate 224 and harrow member 5 (so that impact resistance is of less concern), can be constructed with more advantageous spring qualities.

The plurality of resilient spring plates 222 may be constructed with the same or materials as discussed in earlier examples of the resilient spring plate 22. In yet further examples, one or more of the resilient spring plates 222 may be a sacrificial wear part or function as compliant memner to preserve other parts of the link assembly 203.

In other examples, the plurality of resilient spring plates 222 may include more than two spring plates 222, 224. In some examples, this can include adding subsequent spring plates of the same size, or type, as the first spring plate 224 or second spring plate 226 (or spring plate 22 described in earlier embodiments). In some examples, the plurality of resilient spring plates are cascading in size, with smaller diameter spring plates adjacent to the first clamping portion 21 and larger diameter spring plates adjacent the harrow member 5. Having a plurality of resilient spring plates 22 may provide an increased spring constant whilst reducing the stress in each of the respective spring plates 222. This is analogous to leaf springs used in wheeled vehicles (such as trucks) where a series of leaves are stacked together with progressively shorter leaves.

## Claims

1. A link assembly (3) for an agricultural ground engaging chain (1) including a plurality of link assemblies, the link assembly including:
- a first component (7) having a first clamping portion (21) and a first link portion (13) for linking with a link portion of an adjacent link assembly;
- a second component (9) having a second clamping portion (27) and a second link portion (15) for linking with a link portion of an adjacent link assembly;
- a harrow member (5) has a first side (17) and an opposite second side (19);
- at least one resilient spring plate (22), wherein the resilient spring plate is elastically deformable, and
- at least one fastening element (11),
wherein, when the link is assembled, the harrow member (5) and the resilient spring plate (22) are clamped between the first clamping portion (21) and the second clamping portion (27), and
wherein under an applied pressure to elastically deform the resilient spring plate (22) to enable engagement of the at least one fastening element, whereby upon release of the applied pressure, the resultant elastic stress in the resilient spring plate (22) urges the first and second components (7, 9) to bear against the fastening element to retain the components of the link assembly together.

2. A link assembly for an agricultural ground engaging chain including a plurality of said link assemblies, the link assembly including:
- a first component (7) having at least one first fastener receiving passage (23), a first clamping portion (21), and a first link portion (13) for linking with a link portion of an adjacent assembly;
- a second component (9) having at least one second fastener receiving passage (29), a second clamping portion (27), and a second link portion (15) for linking with a link portion of another adjacent link assembly;
- a harrow member (5) has a first side (17) and an opposite second side (19);
- a resilient spring plate (22), wherein the resilient spring plate is elastically deformable; and
- at least one fastener (11) having a shaft (12) extending along a central shaft axis;
wherein when the link assembly is assembled;
- the shaft is located, at least in part, through the first and second fastener receiving passages;
- the harrow member (5) and the resilient spring plate (22) are located between the clamping portions (21, 27) of the first and second components (7, 9); and
- the resilient spring plate (22) is elastically deformed such that the resultant stress in the resilient spring plate (22) causes wall portions (24, 30) of each of the first and second fastener receiving passages (23, 29) to urge against the shaft (12) towards the shaft axis to increase the maximum static frictional force between the wall portions of the first and second fastener receiving passages (23, 29) and the shaft (12).

3. A link assembly according to claim 2, wherein:
- the first component (7) includes a projecting portion (25) opposite the first link portion (13), wherein the first fastener receiving passage (23) is disposed in the projecting portion (25),
- the second component (9) includes a socket (51) opposite the second link portion (15), wherein the socket (51) is adapted to receive at least part of the projecting portion (25),
- the harrow member (5) includes a harrow aperture (41),
- the resilient spring plate (22) includes a plate aperture (42)
wherein when the link assembly is assembled, the first component passes (7) through the harrow aperture (41) and the plate aperture (42) , and the projecting portion (25) and the first fastener receiving passage (23) is located adjacent the second side (19) of the harrow member (5), and
wherein when the link assembly is assembled, at least part of the projecting portion (25) is located in the socket (51) with the first and second fastener receiving passages (23, 25) aligned for locating the shaft (12).

4. A link assembly according to any one of the preceding claims, wherein the harrow member (5) has a first side (17) and an opposite second side (19) wherein when the link assembly is assembled, the first side (17) faces the clamping portion (21) of the first component (7) and second side (19) faces the clamping portion (27) of the second component (9),
wherein the resilient spring plate (22) is located:
- between the first side (17) and the clamping portion (21) of the first component (7), or
- between the second side (19) and the clamping portion (27) of the second component (9).

5. A link assembly according to claim 4, wherein the harrow member (5) is substantially disc-shaped or dish-shaped with the first side (17) having a concave surface, and
wherein the resilient spring plate (22) is located adjacent to the first side (17).

6. A link assembly according to any one of the preceding claims wherein the resilient spring plate (22) is a circular plate.

7. A link assembly according to any one of the preceding claims, wherein the first and second link portions (13, 15) are formed of a hook portion or a loop portion.

8. A link assembly according to any one of claims 1 to 6, wherein:
- the first link portion (13), at the first side (17) of the harrow member (5), includes a bulbous end (113); and
- the second link portion (15), at the second side (19) of the harrow member (5), includes a socket (115),
wherein to link with adjacent link assemblies, the bulbous end (113) is received in a respective socket (115) of an adjacent link assembly (3) and the socket (115) receives a respective bulbous end (113) of another adjacent link assembly (3").

9. A link assembly (3) according to any one of the preceding claims wherein the resilient spring plate (22) comprises a spring steel.

10. A link assembly (3) according to any one of the preceding claims wherein the at least one resilient spring plate (22) comprises a plurality of resilient spring plates (322), wherein the combination of the plurality of resilient spring plates (322) and the harrow member (5) are clamped between the first clamping portion (21) and the second clamping portion (27).

11. A link assembly (3) according to claim 10 wherein the plurality of resilient spring plates (222) comprises:
- a first spring plate (224); and
- at least a second spring plate (226), .

12. A link assembly (3) according to claim 11 wherein the first spring plate (224) and the second spring plate (226) are configured with different respective spring constants.

13. A link assembly (3) according to either claim 11 or 12, wherein the first spring plate (224) and second spring plate (226) are circular plates configured with different respective diameters.

14. A link assembly (3) according to any one of claims 11 to 13, wherein the first spring plate (224) and second spring plate (226) are configured with different respective thicknesses.

15. An agricultural ground engaging chain including a plurality of link assemblies, according to any one of the preceding claims.

## Patentansprüche

1. Eine Verbindungsanordnung (3) für eine landwirtschaftliche Bodeneingriffskette (1) mit einer Mehrzahl von Verbindungsanordnungen, wobei die Verbindungsanordnung folgende Merkmale umfasst:
- eine erste Komponente (7) mit einem ersten Klemmabschnitt (21) und einem ersten Verbindungsabschnitt (13) zum Verbinden mit einem Verbindungsabschnitt einer angrenzenden Verbindungsanordnung;
- eine zweite Komponente (9) mit einem zweiten Klemmabschnitt (27) und einem zweiten Verbindungsabschnitt (15) zum Verbinden mit einem Verbindungsabschnitt einer angrenzenden Verbindungsanordnung;
- ein Eggenbauglied (5) mit einer ersten Seite (17) und einer gegenüberliegenden zweiten Seite (19);
- zumindest ein nachgiebiges Federblatt (22), wobei das nachgiebige Federblatt elastisch verformbar ist, und
- zumindest ein Befestigungselement (11),
wobei dann, wenn die Verbindung zusammengesetzt ist, das Eggenbauglied (5) und das nachgiebige Federblatt (22) zwischen dem ersten Klemmabschnitt (21) und dem zweiten Klemmabschnitt (27) geklemmt sind, und
wobei unter einem ausgeübten Druck das nachgiebige Federblatt (22) elastisch verformt wird, um einen Eingriff des zumindest einen Befestigungselements zu ermöglichen, wodurch auf das Nachlassen des ausgeübten Drucks hin die sich in dem nachgiebigen Federblatt (22) ergebende elastische Spannung die erste und zweite Komponente (7, 9) drückt, damit dieselben an dem Befestigungselement anliegen, um die Komponenten der Verbindungsanordnung zusammenzuhalten.

2. Eine Verbindungsanordnung für eine landwirtschaftliche Bodeneingriffskette mit einer Mehrzahl dieser Verbindungsanordnungen, wobei die Verbindungsanordnung folgende Merkmale umfasst:
- eine erste Komponente (7) mit zumindest einem ersten Befestigungsvorrichtungsaufnahmedurchgang (23), einem ersten Klemmabschnitt (21) und einem ersten Verbindungsabschnitt (13) zum Verbinden mit einem Verbindungsabschnitt einer angrenzenden Anordnung;
- eine zweite Komponente (9) mit zumindest einem zweiten Befestigungsvorrichtungsaufnahmedurchgang (29), einem zweiten Klemmabschnitt (27) und einem zweiten Verbindungsabschnitt (15) zum Verbinden mit einem Verbindungsabschnitt einer anderen angrenzenden Verbindungsanordnung;
- ein Eggenbauglied (5) mit einer ersten Seite (17) und einer gegenüberliegenden zweite Seite (19);
- ein nachgiebiges Federblatt (22), wobei das nachgiebige Federblatt elastisch verformbar ist, und
- zumindest eine Befestigungsvorrichtung (11) mit einer Welle (12), die sich entlang einer zentralen Wellenachse erstreckt;
wobei dann, wenn die Verbindungsanordnung zusammengesetzt ist,
- sich die Welle zumindest zum Teil durch die erste und zweite Befestigungsvorrichtungsaufnahmedurchgänge befindet;
- sich das Eggenbauglied (5) und das nachgiebige Federblatt (22) zwischen den Klemmabschnitten (21, 27) der ersten und zweiten Komponente (7, 9) befinden; und
- das nachgiebige Federblatt (22) derart elastisch verformt wird, dass die sich ergebende Spannung in dem nachgiebigen Federblatt (22) bewirkt, dass Wandabschnitte (24, 30) jedes des ersten und zweiten Befestigungsvorrichtungsaufnahmedurchgangs (23, 29) gegen die Welle (12) in Richtung der Wellenachse drücken, um die maximale statische Reibungskraft zwischen den Wandabschnitten des ersten und zweiten Befestigungsvorrichtungsaufnahmedurchgangs (23, 29) und der Welle (12) zu erhöhen.

3. Eine Verbindungsanordnung gemäß Anspruch 2, wobei:
- die erste Komponente (7) einen Vorsprungsabschnitt (25) gegenüber des ersten Verbindungsabschnitts (13) umfasst, wobei der erste Befestigungsvorrichtungsaufnahmedurchgang (23) in dem Vorsprungsabschnitt (25) angeordnet ist,
- die zweite Komponente (9) eine Buchse (51) gegenüber von dem zweiten Verbindungsabschnitt (15) umfasst, wobei die Buchse (51) dahingehend angepasst ist, zumindest einen Teil des Vorsprungsabschnitts (25) aufzunehmen,
- das Eggenbauglied (5) eine Eggenöffnung (41) umfasst,
- das nachgiebige Federblatt (22) eine Plattenöffnung (42) umfasst;
wobei dann, wenn die Verbindungsanordnung zusammengesetzt ist, die erste Komponente (7) durch die Eggenöffnung (41) und die Plattenöffnung (42) verläuft und sich der Vorsprungsabschnitt (25) und der erste Befestigungsvorrichtungsaufnahmedurchgang (23) angrenzend an die zweite Seite (19) des Eggenbauglieds (5) befindet, und
wobei dann, wenn die Verbindungsanordnung zusammengesetzt ist, sich zumindest ein Teil des Vorsprungsabschnitts (25) in der Buchse (51) befindet, wobei der erste und zweite Befestigungsvorrichtungsaufnahmedurchgang (23, 25) dahingehend ausgerichtet sind, um die Welle (12) anzuordnen.

4. Eine Verbindungsanordnung gemäß einem der vorhergehenden Ansprüche, wobei das Eggenbauglied (5) eine erste Seite (17) und eine gegenüberliegende zweite Seite (19) aufweist, wobei dann, wenn die Verbindungsanordnung zusammengesetzt ist, die erste Seite (17) dem Klemmabschnitt (21) der ersten Komponente (7) zugewandt ist und die zweite Seite (19) dem Klemmabschnitt (27) der zweiten Komponente (9) zugewandt ist,
wobei sich das nachgiebige Federblatt (22) befindet:
- zwischen der ersten Seite (17) und dem Klemmabschnitt (21) der ersten Komponente (7) oder
- zwischen der zweiten Seite (19) und dem Klemmabschnitt (27) der zweiten Komponente (9).

5. Eine Verbindungsanordnung gemäß Anspruch 4, wobei das Eggenbauglied (5) im Wesentlichen scheibenförmig oder schalenförmig ist, wobei die erste Seite (17) eine konkave Oberfläche aufweist, und
wobei sich das nachgiebige Federblatt (22) angrenzend an die erste Seite (17) befindet.

6. Eine Verbindungsanordnung gemäß einem der vorhergehenden Ansprüche, wobei das nachgiebige Federblatt (22) eine kreisförmige Platte ist.

7. Eine Verbindungsanordnung gemäß einem der vorhergehenden Ansprüche, wobei der erste und zweite Verbindungsabschnitt (13, 15) aus einem Hakenabschnitt oder einem Schlaufenabschnitt gebildet sind.

8. Eine Verbindungsanordnung gemäß einem der Ansprüche 1 bis 6, wobei:
- der erste Verbindungsabschnitt (13) an der ersten Seite (17) des Eggenbauglieds (5) ein knollenförmiges Ende (113) umfasst; und
- der zweite Verbindungsabschnitt (15) an der zweiten Seite (19) des Eggenbauglieds (5) eine Buchse (115) umfasst,
wobei das knollenförmige Ende (113) zum Verbinden mit angrenzenden Verbindungsanordnungen in einer jeweiligen Buchse (115) einer angrenzenden Verbindungsanordnung (3) aufgenommen ist und die Buchse (115) ein jeweiliges knollenförmiges Ende (113) einer anderen angrenzenden Verbindungsanordnung (3") aufnimmt.

9. Eine Verbindungsanordnung (3) gemäß einem der vorhergehenden Ansprüche, wobei das nachgiebige Federblatt (22) einen Federstahl aufweist.

10. Eine Verbindungsanordnung (3) gemäß einem der vorhergehenden Ansprüche, wobei das zumindest eine nachgiebige Federblatt (22) eine Mehrzahl von nachgiebigen Federblättern (322) aufweist, wobei die Kombination der Mehrzahl von nachgiebigen Federblättern (322) und des Eggenbauglieds (5) zwischen dem ersten Klemmabschnitt (21) und dem zweiten Klemmabschnitt (27) geklemmt ist.

11. Eine Verbindungsanordnung (3) gemäß Anspruch 10, wobei die Mehrzahl von nachgiebigen Federblättern (222) folgende Merkmale aufweist:
- ein erstes Federblatt (224); und
- zumindest ein zweites Federblatt (226).

12. Eine Verbindungsanordnung (3) gemäß Anspruch 11, wobei das erste Federblatt (224) und das zweite Federblatt (226) mit jeweils unterschiedlichen Federkonstanten ausgebildet sind.

13. Eine Verbindungsanordnung (3) gemäß Anspruch 11 oder 12, wobei das erste Federblatt (224) und zweite Federblatt (226) kreisförmige Platten sind, die mit jeweils unterschiedlichen Durchmessern ausgebildet sind.

14. Eine Verbindungsanordnung (3) gemäß einem der Ansprüche 11 bis 13, wobei das erste Federblatt (224) und zweite Federblatt (226) mit jeweils unterschiedlichen Dicken ausgebildet sind.

15. Eine landwirtschaftliche Bodeneingriffskette mit einer Mehrzahl von Verbindungsanordnungen gemäß einem der vorhergehenden Ansprüche.

## Revendications

1. Ensemble de liaison (3) pour une chaîne agricole de mise en prise avec la terre (1) comportant une pluralité d'ensembles de liaison, l'ensemble de liaison comportant :
- un premier composant (7) présentant une première portion de serrage (21) et une première portion de liaison (13) pour la liaison avec une portion de liaison d'un ensemble de liaison adjacent ;
- un second composant (9) présentant une seconde portion de serrage (27) et une seconde portion de liaison (15) pour la liaison avec une portion de liaison d'un ensemble de liaison adjacent ;
- un élément de herse (5) présente un premier côté (17) et un second côté opposé (19) ;
- au moins une plaque de ressort résiliente (22), la plaque de ressort résiliente étant élastiquement déformable, et
- au moins un élément de fixation (11),
dans lequel, lorsque la liaison est assemblée, l'élément de herse (5) et la plaque de ressort résiliente (22) sont serrés entre la première portion de serrage (21) et la seconde portion de serrage (27), et
dans lequel sous une pression appliquée pour déformer élastiquement la plaque de ressort résiliente (22) afin de permettre l'engagement de l'au moins un élément de fixation de sorte que, lors du relâchement de la pression appliquée, la contrainte élastique résultante dans la plaque de ressort résiliente (22) pousse les premier et second composants (7, 9) pour s'appuyer contre l'élément de fixation afin de retenir ensemble les composants de l'ensemble de liaison.

2. Ensemble de liaison pour une chaîne agricole de mise en prise avec la terre comportant une pluralité desdits ensembles de liaison, l'ensemble de liaison comportant :
- un premier composant (7) présentant au moins un premier passage de réception d'élément de fixation (23), une première portion de serrage (21) et une première portion de liaison (13) pour la liaison avec une portion de liaison d'un ensemble adjacent ;
- un second composant (9) présentant au moins un second passage de réception d'élément de fixation (29), une seconde portion de serrage (27) et une seconde portion de liaison (15) pour la liaison avec une portion de liaison d'un autre ensemble de liaison adjacent ;
- un élément de herse (5) présente un premier côté (17) et un second côté opposé (19) ;
- une plaque de ressort résiliente (22), la plaque de ressort résiliente étant élastiquement déformable ; et
- au moins un élément de fixation (11) présentant un arbre (12) s'étendant le long d'un axe d'arbre central ;
dans lequel lorsque l'ensemble de liaison est assemblé ;
- l'arbre est situé, au moins en partie, à travers les premier et second passages de réception d'éléments de fixation ;
- l'élément de herse (5) et la plaque de ressort résiliente (22) sont situés entre les portions de serrage (21, 27) des premier et second composants (7, 9) ; et
- la plaque de ressort résiliente (22) est déformée élastiquement de telle sorte que la contrainte résultante dans la plaque de ressort résiliente (22) amène des portions de paroi (24, 30) de chacun des premier et second passages de réception d'éléments de fixation (23, 29) à pousser contre l'arbre (12) vers l'axe d'arbre pour augmenter la force de frottement statique maximale entre les portions de paroi des premier et second passages de réception d'éléments de fixation (23, 29) et l'arbre (12).

3. Ensemble de liaison selon la revendication 2, dans lequel :
- le premier composant (7) comporte une portion en saillie (25) opposée à la première portion de liaison (13), le premier passage de réception d'élément de fixation (23) étant disposé dans la portion en saillie (25),
- le second composant (9) comporte une douille (51) opposée à la seconde portion de liaison (15), la douille (51) étant adaptée à recevoir au moins une partie de la portion en saillie (25),
- l'élément de herse (5) comporte une ouverture de herse (41),
- la plaque de ressort résiliente (22) comporte une ouverture de plaque (42),
dans lequel, lorsque l'ensemble de liaison est assemblé, le premier composant (7) passe à travers l'ouverture de herse (41) et l'ouverture de plaque (42), et la portion en saillie (25) et le premier passage de réception d'élément de fixation (23) sont situés de manière adjacente au second côté (19) de l'élément de herse (5), et
dans lequel lorsque l'ensemble de liaison est assemblé, au moins une partie de la portion en saillie (25) est située dans la douille (51) avec les premier et second passages de réception d'éléments de fixation (23, 25) alignés pour positionner l'arbre (12).

4. Ensemble de liaison selon l'une quelconque des revendications précédentes, dans lequel l'élément de herse (5) présente un premier côté (17) et un second côté opposé (19) dans lequel, lorsque l'ensemble de liaison est assemblé, le premier côté (17) fait face à la portion de serrage (21) du premier composant (7) et le second côté (19) fait face à la portion de serrage (27) du second composant (9),
dans lequel la plaque de ressort résiliente (22) est située :
- entre le premier côté (17) et la portion de serrage (21) du premier composant (7), ou
- entre le second côté (19) et la portion de serrage (27) du second composant (9).

5. Ensemble de liaison selon la revendication 4, dans lequel l'élément de herse (5) est sensiblement en forme de disque ou en forme de bol avec le premier côté (17) présentant une surface concave, et
dans lequel la plaque de ressort résiliente (22) est située de manière adjacente au premier côté (17).

6. Ensemble de liaison selon l'une quelconque des revendications précédentes, dans lequel la plaque de ressort résiliente (22) est une plaque circulaire.

7. Ensemble de liaison selon l'une quelconque des revendications précédentes, dans lequel les première et seconde portions de liaison (13, 15) sont formées d'une portion de crochet ou d'une portion de boucle.

8. Ensemble de liaison selon l'une quelconque des revendications 1 à 6, dans lequel :
- la première portion de liaison (13), au niveau du premier côté (17) de l'élément de herse (5), comporte une extrémité bulbeuse (113) ; et
- la seconde portion de liaison (15), au niveau du second côté (19) de l'élément de herse (5), comporte une douille (115),
dans lequel pour la liaison avec des ensembles de liaison adjacents, l'extrémité bulbeuse (113) est reçue dans une douille respective (115) d'un ensemble de liaison adjacent (3) et la douille (115) reçoit une extrémité bulbeuse respective (113) d'un autre ensemble de liaison adjacent (3").

9. Ensemble de liaison (3) selon l'une quelconque des revendications précédentes, dans lequel la plaque de ressort résiliente (22) comprend un acier à ressort.

10. Ensemble de liaison (3) selon l'une quelconque des revendications précédentes, dans lequel l'au moins une plaque de ressort résiliente (22) comprend une pluralité de plaques de ressort résilientes (322), dans lequel la combinaison de la pluralité de plaques de ressort résilientes (322) et l'élément de herse (5) sont serrés entre la première portion de serrage (21) et la seconde portion de serrage (27).

11. Ensemble de liaison (3) selon la revendication 10, dans lequel la pluralité de plaques de ressort résilientes (222) comprend :
- une première plaque de ressort (224) ; et
- au moins une seconde plaque de ressort (226).

12. Ensemble de liaison (3) selon la revendication 11, dans lequel la première plaque de ressort (224) et la seconde plaque de ressort (226) sont configurées avec des constantes de ressort respectives différentes.

13. Ensemble de liaison (3) selon la revendication 11 ou 12, dans lequel la première plaque de ressort (224) et la seconde plaque de ressort (226) sont des plaques circulaires configurées avec des diamètres respectifs différents.

14. Ensemble de liaison (3) selon l'une quelconque des revendications 11 à 13, dans lequel la première plaque de ressort (224) et la seconde plaque de ressort (226) sont configurées avec des épaisseurs respectives différentes.

15. Chaîne agricole de mise en prise avec la terre comportant une pluralité d'ensembles de liaison selon l'une quelconque des revendications précédentes.
